# EUROPÄISCHE PATENTANMELDUNG

(11) **EP 2 713 486 A1**
(43) Veröffentlichungstag der Anmeldung: **02.04.2014**
(21) Anmeldenummer: 12186559.6
(22) Anmeldetag: 28.09.2012
(51) Int. Cl.: H02K 29/08, H02K 29/12

(54) **Elektrische Maschine und Betriebsverfahren**

(71) Anmelder: Siemens Aktiengesellschaft, 80333 München (DE)
(72) Erfinder: Burkhardt, Yves, 91056 Erlangen (DE); Schramm, Marco, 90489 Nürnberg (DE)

(57) **Zusammenfassung**

Die Erfindung betrifft eine elektrische Maschine (1), ein Antriebssystem (20) mit dieser elektrischen Maschine (1) und ein dazugehöriges Betriebsverfahren. Die elektrische Maschine (1) weist eine Vielzahl von Zahnsegmenten (6) auf, welche Einzelzahnwicklungen (8) aufweisen, wobei zumindest einem Zahnsegment (6) ein Sensor (8, 12) zugeordnet ist. Mittels dieses zahnspezifischen Sensors (8, 12) ist eine Ortung eines Rotors (23) der elektrischen Maschine (1) ermöglicht.

## Beschreibung

Die Erfindung betrifft eine elektrische Maschine. Beispiele für elektrische Maschinen sind Asynchronmaschinen und Synchronmaschinen. Bei den Synchronmaschinen kann zwischen permanenterregten und fremderregten Synchronmaschinen unterschieden werden. Eine elektrische Maschine kann als Motor oder als Generator betrieben werden.

Zur Bestromung der elektrischen Maschine ist ein Stromrichter vorgesehen. Zur Regelung und/oder Steuerung eines Antriebs, welcher eine elektrische Maschine und einen Stromrichter aufweist, sind Sensoren vorgesehen.

Eine Aufgabe der vorliegenden Erfindung ist es, einen möglichst effizienten Aufbau der elektrischen Maschine anzugeben.

Ausgestaltungen der Erfindung ergeben sich gemäß der Ansprüchen 1 bis 10.

Ist eine elektrische Maschine als permanentmagneterregte Synchronmaschinen ausgeführt, so kann diese beispielsweise mit verteilter oder konzentrierter Statorwicklung ausgeführt werden. Einzelzahnwicklungen können dabei fertigungstechnische Vorteile haben. Bei der Einzelzahnwicklung umschließt eine Spule genau einen Statorzahn, woraus sich die Möglichkeit ergibt, das Statorblechpaket aus einzelnen Zahnsegmenten (Einzelzahnsegmenten) aufzubauen und diese automatisiert zu fertigen. Die Einzelzahnsegmente können in einer Ausgestaltung der elektrischen Maschine einteilig miteinander verbunden sein.

Das Einzelzahnsegment bzw. eine Vielzahl von Einzelzahnsegmenten können mit einer Leistungselektronik versehen sein bzw. es kann eine Leistungselektronik einem Zahnsegment zugeordnet sein. Durch eine unmittelbare Positionierung der Leistungselektronik am Einzelzahnsegment bzw. am Stator ergibt sich eine kompakte Bauweise der elektrischen Maschine.

Die Leistungselektronik ist beispielsweise ein Leistungselektronikmodul, welches als eine modulare Baueinheit ausgeführt ist. Ferner ist es möglich, dass eine Vielzahl von Zahnsegmenten einer Leistungselektronik zugeordnet sind. Ein Stromrichter kann ein Leistungselektronikmodul oder eine Vielzahl von Leistungselektronikmodulen aufweisen. Die Leistungselektronik bzw. das Leistungselektronikmodul dient der Umrichtung und/oder Gleichrichtung und/oder Wechselrichtung elektrischen Stromes. Die Leistungselektronik weist Leistungshalbleiter auf. Gegebenenfalls weist die Leistungselektronik auch einen Zwischenkreis bzw. Zwischenkreiskondensatoren auf.

In einer weiteren Ausgestaltung ist das Einzelzahnsegment bzw. sind eine Vielzahl von Einzelzahnsegmenten mit einer Steuerelektronik versehen bzw. es ist eine Steuerelektronik einem Zahnsegment zugeordnet. Die Steuerelektronik ist derart ausgeführt, dass durch diese Steuerungsfunktionen und/oder Regelungsfunktionen und/oder Messfunktionen ausführbar sind. Durch eine unmittelbare Positionierung der Steuerelektronik an der Leistungselektronik und/oder am Einzelzahnsegment bzw. am Stator ergibt sich eine kompakte Bauweise der elektrischen Maschine.

In einer weiteren Ausgestaltung ist das Einzelzahnsegment bzw. sind eine Vielzahl von Einzelzahnsegmenten mit zumindest einem Sensor versehen bzw. es ist ein Sensor einem Zahnsegment direkt zugeordnet. Der Sensor dient zum Beispiel zur Messung eines magnetischen Flusses. Der Sensor ist mit einer Steuerelektronik verbunden um Sensorsignale weiterzuleiten und/oder mit Hilfe von Messfunktionen in der Steuerelektronik aufzunehmen. Durch eine unmittelbare Positionierung des Sensors am Stator lassen sich gute Messergebnisse erzielen. Weist ein Zahn der elektrischen Maschine eine Einzelzahnwicklung auf, so bietet dies die Möglichkeit, der individuellen Ansteuerung dieses Zahnes. Weist die elektrische Maschine eine Vielzahl von Einzelzahnwicklungen auf, so ergeben sich Zahnmodule, welche individuell bestrombar sind. Sie sind folglich bzgl. der Bestromung voneinander autark. Autarke Module werden beispielsweise von einer Gleichstromquelle oder einer Wechselstromquelle mit elektrischer Energie versorgt. Autarke Module sind auch derart ausgestaltbar, dass diese eine Datenschnittstelle zum Senden und/oder Empfangen von Datensignalen aufweisen.

Ein solcher autarker Aufbau ermöglicht beispielsweise eine Abschaltung nicht benötigter Zahnmodule in einem Teillastbetrieb der elektrischen Maschine. Damit ist es möglich den Arbeitspunkt der elektrischen Maschine mit den übrigen Modulen zu erhöhen, was einen effizienteren Betrieb erlaubt. Die übrigen Module sind die, welche nicht abgeschalten sind und folglich aktiv bestromt werden können.

Eine Regelung der elektrischen Synchronmaschine basiert insbesondere auf dem Prinzip der feldorientierten Regelung. Die Anwendung der feldorientierten Regelung zum Betrieb der permanentmagneterregten Synchronmaschine oder der fremderregten Synchronmaschine erfordert üblicherweise die Kenntnis der Rotorlage, welche über den gesamten Drehzahlbereich zu bestimmen ist. Außerdem kann eine Überwachung der Temperatur und/oder eine Erkennung von Störungen und/oder Fehlerfällen von Bedeutung sein. Je frühzeitiger dies möglich ist, desto vorteilhafter ist dies für den Betrieb der elektrischen Maschine. Eine Bestimmung der Rotorlage ist auch dann notwendig wenn eine hybride elektrische Maschine betrieben werden soll. Die hybride elektrische Maschine weist Elemente einer Synchronmaschine wie auch einer Asynchronmaschine auf. Eine Synchronmaschine, welche auch einen von einer Asynchronmaschine bekannten Käfig im Rotor aufweist ist ein Beispiel für eine hybride elektrische Maschine. Der Käfig weist parallel zur Rotationsachse der elektrischen Maschine eine Vielzahl von in Zylinderform angeordneten elektrisch leitenden Stäben auf, welche stirnseitig am Rotor mittels eines Kurzschlußringes kurzgeschlossen sind.

Zur Bestimmung der Rotorlage können unterschiedliche Verfahren zum Einsatz kommen. Die Rotorlagebestimmung kann beispielsweise mittels zusätzlicher Messapparatur und/oder mittels geberloser Verfahren erfolgen.

Geberlose Verfahren basieren beispielsweise auf vorhandener Maschinenhardware wie z.B. einen Stromsensor und/oder einen Spannungssensor.

Bei Verfahren mit zusätzlicher Messapparatur werden beispielsweise magnetische und/oder optische Rotorlagegeber wie Resolver, Hallsensoren, optische Inkrementalgeber etc. verwendet. Dabei ist in der Regel ein zusätzliches Anbauteil erforderlich, welches zu verkabeln ist.

Zu den geberlosen Verfahren gehören beispielsweise die Verfahren, welche zur Bestimmung der Rotorlage eine Analyse der Strangströme und/oder Spannungen vorsehen. Aus dem Strangstrom bzw. der Strangspannung kann die Rotorlage errechnet werden. Die Genauigkeit kann durch Mehrfachmessungen verbessert werden. Geberlose Verfahren basieren beispielsweise auf einer Messung eines Augenblickswertes oder auch auf einem eingeprägten Meßstrom. Der Meßstrom ist beispielsweise ein hochfrequenter Meßstrom im kHz-Bereich.

Um bei einem geberlosen Verfahren bei niedrigen Drehzahlen die Genauigkeit zu verbessern, ist auf die Verwendung exakter Maschinenparameter abzustellen. Zur Messung der Statortemperatur werden als Sensor z.B. Temperaturmessfühler (KTY, PT100(0), PTC, ...) in die Statorwicklung integriert. Eine Möglichkeit zur Aufnahme der Rotortemperatur ergibt sich durch die Verwendung eines drahtlos Temperaturdaten übertragenden Temperatursensors.

In einer Ausgestaltung der elektrischen Maschine weist diese eine Vielzahl von Zahnsegmenten auf. Die Zahnsegmente weisen jeweils Wicklungen auf. Diese sind die Einzelzahnwicklungen der elektrischen Maschine. Einem Zahnsegment ist dabei ein Sensor zugeordnet.

Da die elektrische Maschine Einzelzahnwicklungen aufweist, sind die Zähne voneinander autark ausführbar. Einzelzahnwicklungen können unabhängig voneinander mittels einer Vielzahl von Stromrichtern bestromt werden. In einer Ausgestaltung der elektrischen Maschine ist zumindest einer Einzelzahnwicklung eine Mess- und Diagnosefunktion zugeordnet.

In einer Ausgestaltung der elektrischen Maschine ist jeder Einzelzahnwicklung ein Stromrichter, insbesondere ein Wechselrichter zugeordnet. Dieser Wechselrichter ist beispielsweise stirnseitig am Statorblechpaket 22 positioniert. Eine Vielzahl von Wechselrichtern kann an einem gemeinsamen Spannungszwischenkreis angeschlossen sein. Dieser Spannungszwischenkreis wird von einem einzigen Gleichrichter gespeist.

In einer Ausgestaltung der elektrischen Maschine ist der Stator segmentiert aufgebaut. Der Stator weist Segmente mit jeweils einer Einzelzahnwicklung auf. Zumindest ein Segment ist derart ausgestaltet, dass es eine Einzelzahnwicklung und ein Leistungselektronikmodul aufweist. Das Leistungselektronikmodul ist insbesondere ein Wechselrichter. Derart kann der Spulenstrom und damit auch der Spulenfluss durch die Einzelzahnwicklung individuell eingestellt werden. Eine unmittelbar mit der Spule (Wicklung) verbundene Leistungselektronik samt Strom- und Spannungsmesseinrichtung ermöglicht die permanente Erfassung der Betriebsgrößen jedes Einzelzahns. Die Strom- und Spannungsmesseinrichtung sind Beispiele für eine Steuerelektronik.

Durch die Messung der Betriebsgrößen kann die Phasenlage der induzierten Spannung, sowie die magnetische Flussverteilung bestimmt werden. Damit ist auch eine Berechnung bzw. Messung der Rotorlage möglich.

In einer Ausgestaltung der elektrischen Maschine ist die Einzelzahnwicklung als Sensor ausgebildet. Für einen Sensorbetrieb einer autark bestrombaren Einzelzahnwicklung ist beispielsweise vorgesehen, eine gezielte kurzzeitige Abschaltung einzelner Module zu Messzwecken zu ermöglichen. Ein sich ändernder Fluß kann so durch die in der Wicklung induzierte Spannung gemessen werden. Zur Messung des Flusses kann auch ein separater Sensor verwendet werden. Dieser Sensor ist beispielsweise einem Zahnsegment zugeordnet stirnseitig an einem Statorblechpaket der elektrischen Maschine positioniert.

Ein Antriebssystem weist neben der elektrischen Maschine auch den Stromrichter auf. Der Sensor zur Erfassung von Betriebsgrößen ist in einer Ausführung mit dem Stromrichter und/oder mit einer Antriebsregelung verbunden. Mittels einer Auswerteeinheit ist es möglich eine Ortung des Rotors der elektrischen Maschine vorzunehmen. Dabei werden die von dem oder den Sensoren aufgenommenen Betriebsgrößen (z.B. Strom, Spannung, magnetischer Fluss) verarbeitet. Die Auswerteeinheit kann im Stromrichter oder in der Antriebsregelung integriert sein.

In einer Ausgestaltung des Antriebssystems ist die Auswerteeinheit mit einer Vielzahl von Sensoren datentechnisch verbunden. Die Sensoren sind einer elektrischen Maschine oder auch mehreren elektrischen Maschinen zugeordnet. Sind Sensoren einer elektrischen Maschine zugeordnet, so können beispielsweise eine Vielzahl von Messdaten eines oder mehrerer Sensoren zur Erhöhung der Genauigkeit miteinander verknüpft werden. Durch Bildung eines Mittelwertes kann die Ortung des Rotors präzisiert werden. Eine Erhöhung der Genauigkeit der Ortung ist auch dadurch erreichbar, dass zur Ortung des Rotors der elektrischen Maschine Messwerte des Sensors bei einer Vielzahl von Umdrehungen des Rotors verwendet werden.

In einer Ausgestaltung des Betriebs der elektrischen Maschine wird eine Einzelzahnwicklung in einem bestromungsfreien Zustand als Sensor verwendet. Messwerte des Sensors werden in der Auswerteeinheit ausgewertet. Ist die Einzelzahnwicklung nicht bestromt, kann ein Strom- und/oder Spannungssensor der sonst zur Regelung des in die Wicklung eingeprägten Stromes verwendet wird als Meßwertaufnehmer dienen. Damit kann die für die Bestromung der Wicklung notwendige Hardware auch für Sensoraufgaben verwendet werden.

Im Betrieb der elektrischen Maschine ist es auch möglich mittels eines Sensors einen Sättigungszustand eines Zahnes, einiger Zähne oder aller Zähne des Stators der elektrischen Maschine zu ermitteln. Auf diese Weise kann eine Motor- bzw. Rotortemperatur errechnet werden. Es ist damit auch möglich durch das Erkennen von Abweichungen vom Normalbetrieb Fehlerfälle zu detektieren.

Ein Sensor kann einer Vielzahl von Funktionen dienen, wie z.B..
- der Erfassung des Sättigungszustandes
- der Bestimmung der Rotorlage aus Spannungs-/Flussmessungen
- der Bestimmung der (Rotor-)Temperatur
- der Detektion von Fehlern/Unsymmetrien, wobei insbesondere gleiche Sensorwerte einer Vielzahl von Sensoren unterschiedlicher Einzelzähne der elektrischen Maschine miteinander verglichen werden, wobei mittels des Vergleiches Fehler und oder Unsymmetrien festgestellt werden.

In einer Ausgestaltung des Antriebs ist auch dann die Nutzung von Einzelzahnwicklungen zur Messung der Betriebsgrößen möglich, wenn mehrere Spulen, also Einzelzahnwicklungen, mit einem Leistungselektronikmodul verbunden sind. Dies kann in einer Reihenschaltung oder auch in einer Parallelschaltung erfolgen. Dies führt dann zu einer Erfassung eines resultierenden Verhaltens. Bei den autarken (separaten) Einzelzahnwicklungen ist die Messung der Größen jedes einzelnen Zahnes möglich, wodurch Unsymmetrien aufgedeckt werden können und die Messsensitivität beeinflussbar ist.

In einer Ausgestaltung des Betriebs der elektrischen Maschine werden an der Drehmomentbildung nicht beteiligte Einzelzahnwicklungen zur unverfälschten Messung der Fluss-/und Spannungsgrößen eingesetzt. Dies ist bei einer Spulenverschaltung so nicht möglich.

Durch die Verwendung zumindest einer Wicklung zur Ermittlung der Rotorlage ist ein externer Rotorlagegeber verzichtbar. Durch die Verwendung der Wicklung der elektrischen Maschine als eine Art LEM-Sensor zur Ortung des Rotors, ist auch im Bereich niedriger Drehzahlen eine präzise Ortung möglich.

Weitere mögliche Ausgestaltungen der Erfindung ergeben sich beispielhaft aus den nachfolgenden Beschreibungen der Figuren. Es zeigt:
- FIG 1: eine elektrische Maschine;
- FIG 2: ein Zahnsegment;
- FIG 3: einen Querschnitt einer permanenterregten Synchronmaschine;
- FIG 4: eine Kommunikationsverbindung; und
- FIG 5: ein Antriebssystem.

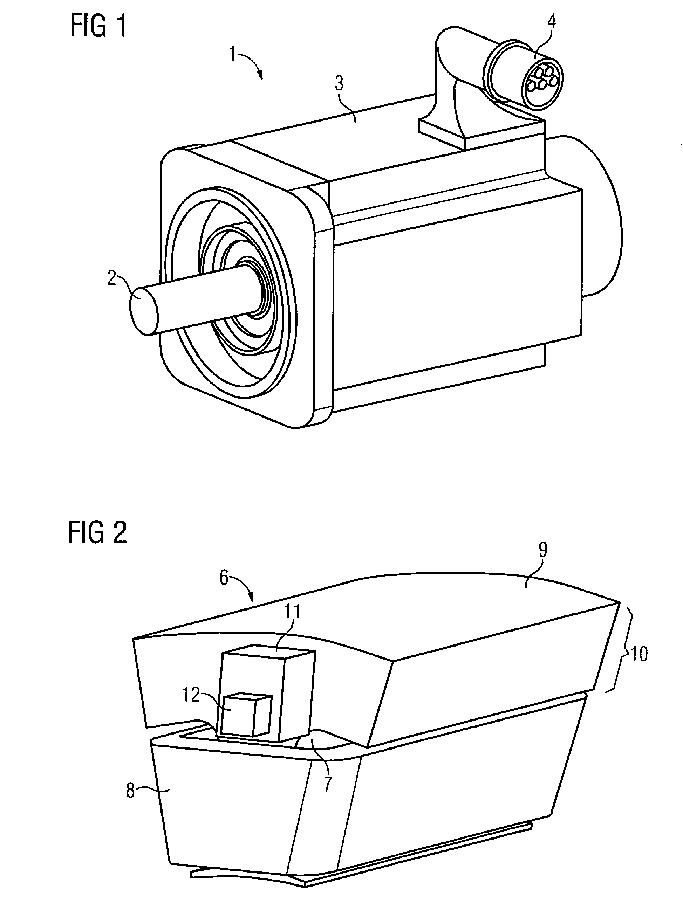

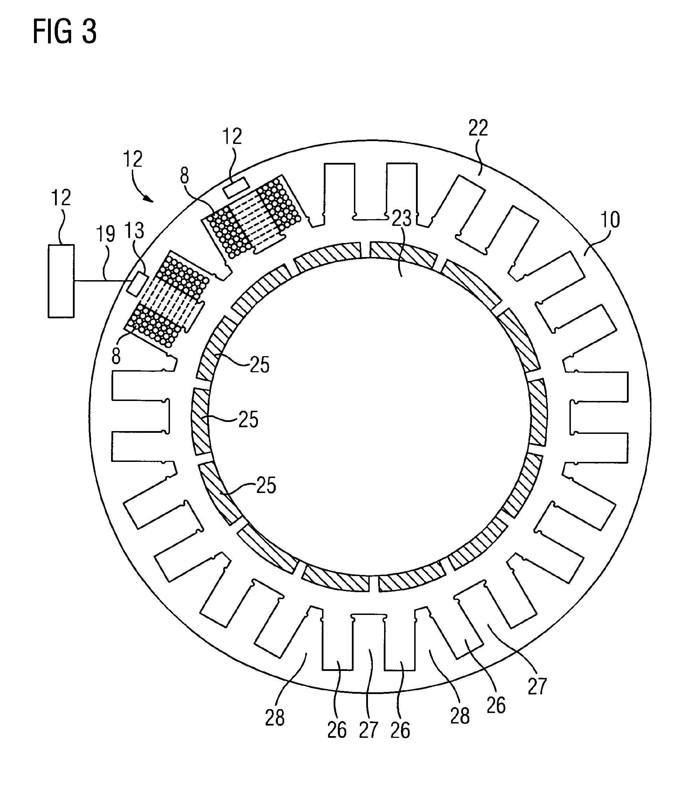

Die Darstellung gemäß Figur 1 zeigt eine elektrische Maschine 1. Die elektrische Maschine 1 weist eine Welle 2, ein Gehäuse 3 und einen elektrischen Anschluss 4 auf. Weiterhin weist die elektrische Maschine 1 einen Stator und einen Rotor auf, welche in Figur 3 dargestellt sind.

Die Darstellung gemäß Figur 2 zeigt ein Zahnsegment 6 einer elektrischen Maschine. Das Zahnsegment 6 weist ein Statorblechpaket 9 mit einem Joch 10, einen Statorzahn 7 und eine Einzelzahnwicklung 8 auf. Mittels einer Leistungselektronik 11 ist die Wicklung 8 bestrombar. Eine Steuerelektronik ermöglicht Steuerungs- und/oder Regelungsfunktionalitäten für die Leistungselektronik 11 und/oder auch eine Meßfunktion. Mittels der Steuerelektronik 12 kann eine Ortung des Rotors der elektrischen Maschine unterstützt bzw. berechnet werden. Die Steuerelektronik 12 ist einem bestimmten Zahn zugeordnet und ist an einer seiner Stirnseiten positioniert. Die Einzelzahnwicklung wird während der Ortung als Sensor verwendet und die Steuerelektronik 12 wertet die aufgenommenen Sensorwerte zur Ortung aus.

Die Darstellung gemäß Figur 3 zeigt ein Ausführungsbeispiel einer elektrischen Maschine 1 in Querschnittsdarstellung. Sie ist als permanenterregter Synchronmotor ausgebildet, welcher einen Stator 22 und einen Rotor 23, der um eine Drehachse 24 drehbar gelagert ist aufweist. Der Rotor 23 ist ein Innenläufer, welcher die Permanentmagnete 25 aufweist. Der Stator 22 enthält an seiner dem Rotor 23 zugewandten inneren Wandung mehrere gleichmäßig über den Umfang verteilte Nuten 26, zwischen denen jeweils ein parallelflankiger Zahn 7 oder ein nicht-parallelflankiger Zahn 28 angeordnet ist. In Umfangsrichtung wechseln sich die Zähne 7 und 28 ab. Sie sind durch ein außen umlaufendes Joch 10 miteinander verbunden. Innerhalb der Nuten 26 verlaufen elektrische Leiter der Einzelzahnwicklungen 8, wobei in Figur 3 aus Gründen einer besseren Übersichtlichkeit nur zwei Einzelzahnwicklungen 8 dargestellt sind. Jede der Einzelzahnwicklungen 8 umschließt einen der parallelflankigen Zähne 27. Die beiden angrenzenden Nuten 26 und der umschlossene Zahn 27 weisen jeweils parallele Seitenwände auf, so dass sich eine vorgefertigte Spule problemlos in das Blechpaket des Stators 22 einsetzen lässt. Dies erleichtert die Herstellung der elektrischen Maschine 1. Außerdem lässt sich so eine hohe Nutfüllung erreichen und die elektrische Maschine 1 kann sehr kompakt sowie mit geringem Materialaufwand realisiert werden. Für Messungen ist zum einen eine stirnseitig am Stator 22 positionierte Steuerelektronik 12 vorgesehen, der als Sensor die Wicklung 8 zugeordnet ist. Alternativ oder in Kombination dazu ist eine weitere vom Stator 22 separierte Steuerelektronik 12 vorgesehen, welche über eine Datenleitung 19 mit einem Sensor 13 verbunden ist.

Der Sensor 13 ist beispielsweise ein Hall-Sensor zur Messung eines magnetischen Flusses. Die Steuerelektronik 12 übernimmt dabei Funktionen einer Auswerteeinheit zur Auswertung von Messsignalen des Sensors.

In einer weiteren Ausgestaltung können auch ausschließlich parallelflankige Zähne vorhanden sein. Bei einer segmentierten Einzelzahnwicklung kann beispielsweise jeder Zahn wie in Figur 2 ausgeführt sein. Diese sind in Umfangsrichtung aneinander gereiht. Dabei ist ebenfalls ein sehr hoher Füllfaktor zu erreichen, ohne dass unbewickelte Zwischenzähne vorliegen. Diese Ausgestaltung ist jedoch nicht dargestellt.

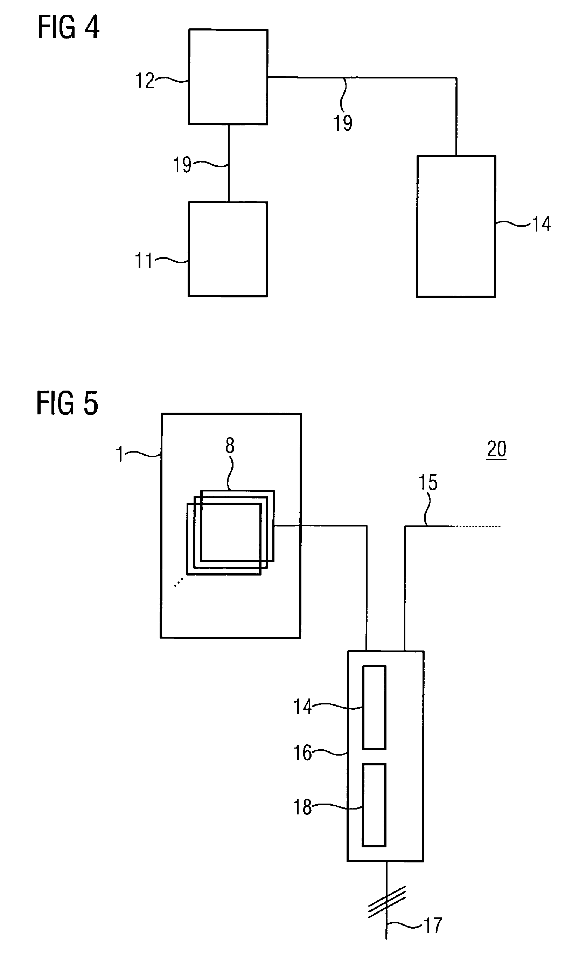

Die Darstellung gemäß Figur 4 zeigt eine Kommunikationsverbindung 19 zwischen einer Steuerelektronik 12 und einer Auswerteeinheit 14. Die Auswerteeinheit 14, beispielsweise für die Ortung des Rotors, kann Messsignale von der Steuerelektronik 12 empfangen, wobei die Steuerelektronik 12 Daten von einer Einheit mit Leistungselektronik 11 erhält.

Die Darstellung gemäß Figur 5 zeigt symbolisch ein Antriebssystem 20, welches eine elektrische Maschine 1 mit einer Vielzahl von Einzelzahnwicklungen 8 aufweist. Die Einzelzahnwicklungen 8 werden mittels eines Stromrichters 16 bestromt. Der Stromrichter 16 weist einen Leistungsanschluss 17 auf, sowie eine Auswerteeinheit 14 und eine Antriebsregelung 18. Über einen Datenbus 15 ist der Stromrichter 16 mit Funktionseinheiten des Antriebssystems 20 datentechnisch verbunden. Der Stromrichter 16 kann in einem bestromungsfreien Zustand einer Einzelzahnwicklung 8 die induzierte Spannung über dieser Wicklung messen, wobei in der Auswerteeinheit die Ortung des Rotors vorgenommen wird. Die Auswerteeinheit 14 bzw. die Antriebsregelung kann als Software und/oder Hardware realisiert sein.

## Patentansprüche

1. Elektrische Maschine (1), welche eine Vielzahl von Zahnsegmenten (6) mit Einzelzahnwicklungen (8) aufweist, wobei zumindest einem Zahnsegment (6) ein Sensor (8, 12) zugeordnet ist.

2. Elektrische Maschine (1) nach Anspruch 1, wobei der Sensor (12) sich stirnseitig an einem Statorblechpaket (9) der elektrischen Maschine (1) befindet.

3. Elektrische Maschine (1) nach Anspruch 1, wobei der Sensor (8) eine Einzelzahnwicklung (8) der elektrischen Maschine (1) ist.

4. Antriebssystem (20), welches eine elektrische Maschine (1) nach einem der Ansprüche 1 bis 3 aufweist, welches einen Stromrichter (16) aufweist, welches einen Sensor (8) aufweist, wobei der Sensor (8) mit dem Stromrichter (16) und/oder mit einer Antriebsregelung (18) verbunden ist, wobei im Stromrichter (16) oder in der Antriebsregelung (18) eine Auswerteeinheit (14) vorgesehen ist, wobei die Auswerteeinheit (14) insbesondere zur Ortung eines Rotors (23) der elektrischen Maschine (1) beiträgt.

5. Antriebssystem (20) nach Anspruch 4, wobei die Auswerteeinheit (14) mit einer Vielzahl von Sensoren (8) datentechnisch verbunden ist.

6. Verfahren zum Betrieb einer elektrischen Maschine (1) nach einem der Ansprüche 1 bis 3, wobei im Betrieb der elektrischen Maschine (1) eine Einzelzahnwicklung (8) in einem bestromungsfreien Zustand als Sensor (8) verwendet wird, wobei der Sensorwert ausgewertet wird.

7. Verfahren nach Anspruch 6, wobei die elektrische Maschine (1) in einem Antriebssystem nach Anspruch 4 oder 5 integriert wird, wobei mittels der Auswertung eine Ortung des Rotors (23) der elektrischen Maschine (1) durchgeführt wird.

8. Verfahren nach Anspruch 6 oder 7, wobei zur Ortung des Rotors (23) der elektrischen Maschine (1) Sensorwerte einer Vielzahl von Umdrehungen des Rotors (23) verwendet werden.

9. Verfahren nach einem der Ansprüche 6 bis 8, wobei zur Ortung des Rotors (23) der elektrischen Maschine (1) Sensorwerte einer Vielzahl von Sensoren (8) der elektrischen Maschine verwendet werden.

10. Verfahren nach einem der Ansprüche 6 bis 9, wobei gleiche Sensorwerte einer Vielzahl von Sensoren (8) unterschiedlicher Einzelzähne der elektrischen Maschine (1) miteinander verglichen werden, wobei mittels des Vergleiches Fehler und oder Unsymmetrien der elektrischen Maschine (1) festgestellt werden.
